# EUROPEAN PATENT SPECIFICATION

(11) **EP 4 414 854 B1**
(45) Date of publication and mention of the grant of the patent: **21.10.2026**
(21) Application number: 22882329.0
(22) Date of filing: 24.06.2022
(51) Int. Cl.: G06F 12/0877

(54) **WRITE CACHE CIRCUIT, DATA WRITE METHOD, AND MEMORY**
SCHREIBCACHESCHALTUNG, DATENSCHREIBVERFAHREN UND SPEICHER
CIRCUIT DE MÉMOIRE CACHE D'ÉCRITURE, PROCÉDÉ D'ÉCRITURE DE DONNÉES ET MÉMOIRE

(30) Priority: 18.10.2021 CN 202111210536
(43) Date of publication of application: 14.08.2024
(73) Proprietor: Changxin Memory Technologies, Inc., Hefei, Anhui 230601 (CN)
(72) Inventor: GAO, Enpeng, Hefei, Anhui 230601 (CN)
(74) Representative: Gulde & Partner
(86) International application number: PCT/CN2022/101171
(87) International publication number: WO 2023/065706

(56) References cited:
- WO-A1-2019/010703
- CN-A- 101 840 383
- CN-A- 104 375 946
- CN-A- 104 461 964
- CN-A- 113 326 020
- CN-A- 113 326 020
- US-A1- 2003 056 060
- US-B2- 8 706 968

## Description

### Technical Field

The present disclosure relates to, but is not limited to, a write cache circuit, a data write method, and a memory.

### Background

In the process of writing data into the memory, it is necessary to ensure that the timing of acquiring a write address is consistent with the timing of a write operation, such that the data write operation can be implemented. Usually, the acquired write address is stored into a memory cell, and then the timing of acquiring the write address from the memory cell is set to be consistent with the timing of the write operation, to ensure that the timing of acquiring the write address is consistent with the timing of the write operation.

However, data write of the memory includes multiple write modes, such as a direct write operation and a mask write operation. The direct write operation is to write data to all memory cells according to the write address. The mask write operation is to write data to part of memory cells according to the write address.

For different write modes, different memory cells are configured to store the write address, to ensure that the different write modes operate independently of each other and do not affect each other. However, the different write modes require different memory cells, thereby greatly increasing the area of a write circuit of the memory, which does not conform to the current development trend of the memory.

Background may be found in US8706968B2 and CN113326020A. US8706968B2 discloses an apparatus for redundant write caching that includes a write request module, a first cache write module, a second cache write module, and a trim module, the write request module detects a write request to store data on a storage device, the first cache write module writes data of the write request to a first cache, the second cache write module writes the data to a second cache, the trim module trims the data from one of the first cache and the second cache in response to an indicator that the storage device stores the data, the data remains available in the other of the first cache and the second cache to service read requests. CN113326020A discloses a cache device that includes two queues, a write - port group, a read - port, and a pop - port. By setting pop - ports for the two queues to store the instruction - miss flags that have not been initiated and the instruction - miss flags that have been responded to by the bus but not written back, the number of cache devices is reduced. Also, the write - port group and the read - port are used to synchronously process the core identifiers of the cores, avoiding the use of a register group to store information and simplifying the logic control.

### Summary

The invention is set out in the appended set of claims. Preferred embodiments are set out in the dependent claims.

### Brief Description of the Drawings

The accompanying drawings incorporated into the specification and constituting a part of the specification illustrate the embodiments of the present disclosure, and are used together with the description to explain the principles of the embodiments of the present disclosure. In these accompanying drawings, similar reference numerals represent similar elements. The accompanying drawings in the following description illustrate some rather than all of the embodiments of the present disclosure. Those skilled in the art may obtain other accompanying drawings based on these accompanying drawings without creative efforts.
FIG. 1 to FIG. 3 are schematic structural diagrams of a write cache circuit according to one embodiment of the present disclosure;
FIG. 4 is a schematic receiving diagram of a second cache module according to one embodiment of the present disclosure; and
FIG. 5 is a schematic receiving diagram of a first cache module according to one embodiment of the present disclosure.

### Detailed description

The technical solutions in the embodiments of the present disclosure are described below clearly and completely with reference to the accompanying drawings in the embodiments of the present disclosure. Apparently, the described embodiments are merely some rather than all of the embodiments of the present disclosure. All other embodiments obtained by those skilled in the art based on the embodiments of the present disclosure without creative efforts should fall within the protection scope of the present disclosure. It should be noted that the embodiments in the present disclosure and features in the embodiments may be combined with each other in a non-conflicting manner.

For different write modes, different memory cells are configured to store the write address, to ensure that the different write modes operate independently of each other and do not affect each other. However, the different write modes require different memory cells, thereby greatly increasing the area of a memory write circuit, which does not conform to the current development trend of the memory.

One embodiment of the present disclosure provides a write cache circuit for integrating a write address storage space required by the write operation and the mask write operation to reduce the layout area of a write circuit in practical applications.

Those of ordinary skill in the art should understand that many technical details are proposed in the embodiments of the present disclosure to make the present disclosure better understood. However, even without these technical details and various changes and modifications made based on the following embodiments, the technical solutions claimed in the present disclosure may still be realized.

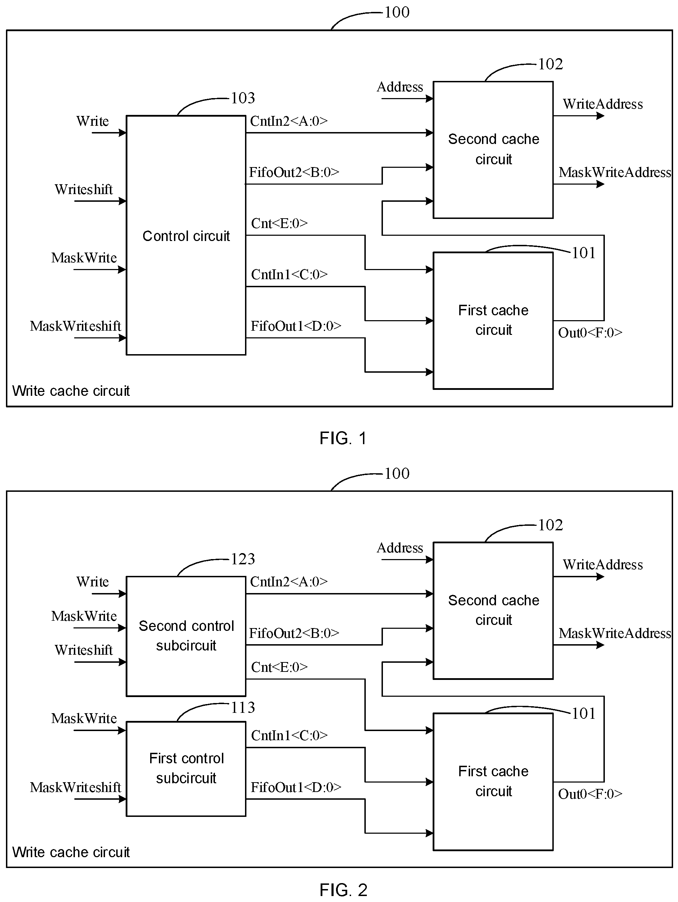

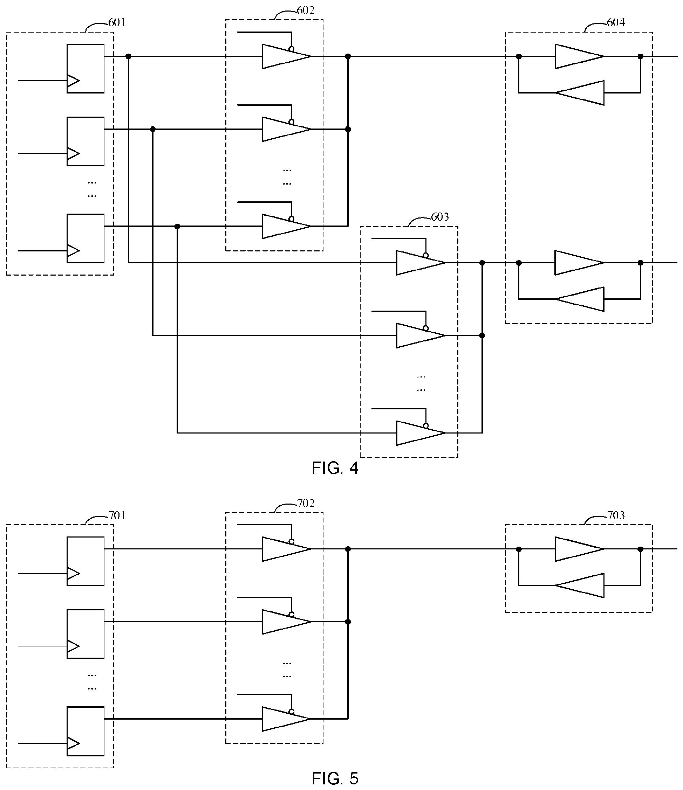

FIG. 1 to FIG. 3 are schematic structural diagrams of a write cache circuit according to this embodiment, FIG. 4 is a schematic receiving diagram of a second cache module according to this embodiment, and FIG. 5 is a schematic receiving diagram of a first cache module according to this embodiment. The write cache circuit provided in this embodiment is further described below in detail with reference to the accompanying drawings, and the details are as follows:

Referring to FIG. 1, the write cache circuit 100 includes a first cache module 101, a second cache module 102, and a control module 103. The second cache module 102 is configured to store data addresses. The first cache module 101 is configured to store pointers.

The control module 103 is configured to generate, according to a mask write instruction MaskWrite, a first write pointer Cntln1 <C:0> and a pointer to be positioned Cnt<E:0>, generate a second write pointer Cntln2<A:0> according to a write command, generate a first output pointer FifoOut1 <D:0> according to a mask write shift instruction MaskWriteShift, and generate a second output pointer FifoOut2<B:0> according to a write shift instruction WriteShift.

The write command is one of a write instruction Write and the mask write instruction MaskWrite. That is, the write command includes the write instruction Write and the mask write instruction MaskWrite. That is, whether the write instruction Write or the mask write instruction MaskWrite is received, the control module 103 may generate the second write pointer Cntln2<A:0>, and the pointer to be positioned Cnt<E:0> and the second write pointer Cntln2<A:0> generated according to the mask write instruction correspond to a same write address Address.

For the features mentioned above, the write instruction Write and the mask write instruction MaskWrite are configured to cache the corresponding write address Address, and the write shift instruction WriteShift and the mask write shift instruction MaskWriteShift are configured to output the cached write address Address, such that the memory completes the data write according to the write address Address.

The second write pointer Cntln2<A:0> is configured to indicate a storage space of the write address Address required to write the write instruction Write and the mask write instruction MaskWrite. The second output pointer FifoOut2<B:0> is configured to indicate a storage space of the write address Address required to output the write shift instruction WriteShift. The first write pointer Cntln1 <C:0> is configured to indicate a storage space of write pointers required by the mask write instruction MaskWrite. The first output pointer FifoOut1 <D:0> is configured to indicate a storage space of output pointers required by the mask write shift instruction MaskWriteShift. The pointer written by the first write pointer Cntln1<C:0> is the pointer to be positioned Cnt<E:0>. The pointer outputted by the first output pointer FifoOut1 <D:0> is the positioned pointer Out0<F:0>. The pointer to be positioned Cnt<E:0> is configured to indicate a storage space of the write address Address required to write the mask write instruction MaskWrite. The positioned pointer Out0<F:0> is configured to indicate a storage space of the write address Address where the mask write shift instruction MaskWriteShift is outputted.

The first cache module 101 is configured to cache the data in a queue, such as a first-in-first-out queue, cache, according to the first write pointer Cntln1<C:0>, the pointer to be positioned Cnt<E:0>, and output the positioned pointer Out0<F:0> according to the first output pointer FifoOut1 <D:0>.

The positioned pointer Out0<F:0> is the pointer to be positioned Cnt<E:0> cached in the first cache module 101. That is, the data of the positioned pointer Out0<F:0> is the same as the data of the corresponding pointer to be positioned Cnt<E:0>. The positioned pointer Out0<F:0> is configured to instruct the second cache module 102 to output the write address Address written by the second write pointer Cntln2<A:0> generated according to the mask write instruction.

The second cache module 102 is configured to cache the data in a queue, such as a first-in-first-out queue, cache the write address Address according to the second write pointer Cntln2<A:0>, and output the cached write address Address according to the second output pointer FifoOut2<B:0> or the positioned pointer Out0<F:0>.

The address outputted according to the write shift instruction WriteShift is a real write address WriteAddress, and the address outputted according to the mask write shift instruction MaskWriteShift is a real mask write address MaskWriteAddress. The real write address WriteAddress and the real mask write address MaskWriteAddress are configured to indicate the write address of the memory.

It should be noted that the above "A", "B", "C", "D", "E", and "F" are configured to represent binary locations corresponding to each pointer. In specific applications, they may be set according to the type of the applied memory, and this embodiment does not constitute a limitation on this data.

It is assumed that the write instruction and the mask write instruction are inputted into the control module 103 at the same time to generate the second write pointer Cntln2<A:0>, and 8 pieces of address data are sequentially written into the second cache module, namely data 1, data 2, data 3, data 4, data 5, data 6, data 7, and data 8. It is continued to assume that data 1, data 3, and data 5 need to be written as masks. At this time, the second write pointer Cntln2<A:0> is configured to write data 1 to data 8 into the second cache module 102, and when writing data 1, data 3, and data 5, the pointer to be positioned Cnt<E:0> that indicates the same storage space as the second write pointer Cntln2<A:0> is generated. The first write pointer Cntln1<C:0> is configured to write the pointer to be positioned Cnt<E:0> into the first cache module 101.

When reading is performed according to the write shift instruction WriteShift, the data cached in the second cache module 102, namely data 1 to data 8 are successively read according to the second output pointer FifoOut2<B:0>. When reading is performed according to the mask write shift instruction MaskWriteShift, the positioned pointer Out0<F:0> is read once according to the first output pointer FifoOut1 <D:0>, and then data 1, data 3 and data 5 are selectively read according to the positioned pointer.

According to the above analysis, regardless of whether it is the write operation or the mask write operation, the addresses needing to be cached are all stored in the second cache module 102, and the first cache module 101 is configured to store the locations of the addresses required for mask write in the second cache module 102. Compared with the way in which the write operation is independent of the mask write operation, the write cache circuit provided by the present disclosure saves one storage space by storing the data of the write operation and the data of the mask write operation into the storage space.

In addition, a location storage space configured to store the address corresponding to the mask write operation is newly added, and the number of data pieces stored in the location storage space is not greater than the number of data pieces configured to store the write address (the reason is that: the data stored in the write address includes write data and mask write data; in extreme cases, the write data are all the mask write data, and at this time, the number of data pieces stored in the location storage space is equal to the number of data pieces stored in the address storage space; while for a normal mask write operation, the number of pieces of mask write data is less than the number of pieces of written data, that is, the required location storage space is smaller than the required data storage space). That is, the capacity of the newly added storage space is smaller than the capacity of the saved storage space, thereby reducing the layout area of the write cache circuit in practical applications.

In one example, the first cache module 101 is shallower than the second cache module 102. By setting the number of data pieces stored in the location storage space to be smaller than the number of data pieces stored in the address storage space, the layout area of the write cache circuit in practical applications is reduced.

Referring to FIG. 2 and FIG. 1, in some embodiments, the control module 103 (referring to FIG. 1) includes a first control submodule 113 and a second control submodule 123.

The first control submodule 113 is configured to generate the first write pointer Cntln1 <C:0> according to the mask write instruction MaskWrite and generate the first output pointer FifoOut1 <D:0> according to the mask write shift instruction WriteShift. The second control submodule 123 is configured to generate the second write pointer Cntln2<A:0> according to the write command, generate the second output pointer FifoOut2<B:0> according to the write shift instruction WriteShift, and generate, according to the mask write instruction MaskWrite, the pointer to be positioned Cnt<E:0>. That is, the first control submodule 113 is configured to control the first cache module 101 to store the pointer to be positioned Cnt<E:0>, and control the first cache module 101 to output the positioned pointer Out0<F:0>. The second control submodule 123 is configured to control the second cache module 102 to store the write address Address, and control the second cache module 102 to output the real write address WriteAddress or the real mask write address MaskWriteAddress.

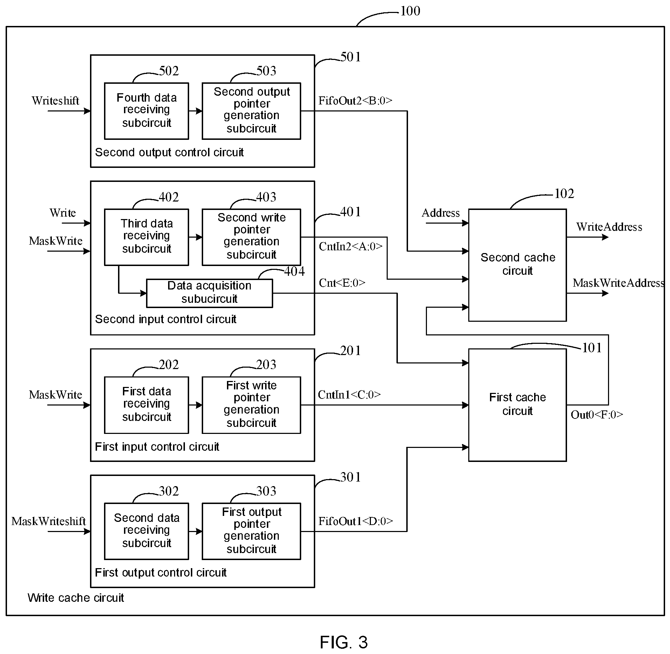

Referring to FIG. 3 and FIG. 2, in some embodiments, the first control submodule 113 includes a first input control unit 201 and a first output control unit 301.

The first input control unit 201 is configured to receive the mask write instruction MaskWrite and generate the first write pointer Cntln1<C:0> according to the mask write instruction MaskWrite. The first output control unit 301 is configured to receive the mask write shift instruction MaskWriteShift and generate the first output pointer FifoOut1 <D:0> according to the mask write shift instruction MaskWriteShift.

In some embodiments, referring to FIG. 3, the first input control unit 201 includes a first data receiving subunit 202 and a first write pointer generation subunit 203.

The first data receiving subunit 202 is configured to receive the mask write instruction MaskWrite and configured to generate the first pointer generation command when receiving the mask write instruction MaskWrite. The first write pointer generation subunit 203 is configured to receive the first pointer generation command and generate the first write pointer Cntln1<C:0> according to the first pointer generation command, the first write pointer Cntln1<C:0> being configured to give an instruction of storing the pointer to be positioned Cnt<E:0> into the first cache module 101.

In some embodiments, referring to FIG. 3, the first output control unit 301 includes a second data receiving subunit 302 and a first output pointer generation subunit 303.

The second data receiving subunit 302 is configured to receive the mask write shift instruction MaskWriteShift and configured to generate the first pointer output command when receiving the mask write shift instruction MaskWriteShift. The first output pointer generation subunit 303 is configured to receive the first pointer output command and generate the first output pointer FifoOut1 <D:0> according to the first pointer output command, the first output pointer FifoOut1<D:0> being configured to instruct the first cache module 101 to output the positioned pointer Out0<F:0>.

Referring to FIG. 3 and FIG. 2, in some embodiments, the second control submodule 123 includes a second input control unit 401 and a second output control unit 501.

The second input control unit 401 is configured to receive the write command, generate the second write pointer Cntln2<A:0> according to the write command, and generate, according to the mask write instruction MaskWrite, the pointer to be positioned Cnt<E:0> when the write command is the mask write instruction MaskWrite. The second output control unit 501 is configured to receive the write shift instruction WriteShift and generate the second output pointer FifoOut2<B:0> according to the write shift instruction WriteShift. Since the write command includes the write instruction Write and the mask write instruction MaskWrite, the second output control unit 501 needs to generate the second write pointer Cntln2<A:0> regardless of whether the write instruction Write or the mask write instruction MaskWrite is received. In some embodiments, the write instruction Write and the mask write instruction MaskWrite may be received through a logical OR gate, and the write command is outputted from an output terminal of the logical OR gate.

In some embodiments, referring to FIG. 3, the second input control unit 401 includes a third data receiving subunit 402, a second write pointer generation subunit 403, and a data acquisition subunit 404.

The third data receiving subunit 402 is configured to receive the write command and configured to generate the second pointer generation command when receiving the write command. The second write pointer generation subunit 403 is configured to receive the second pointer generation command and generate the second write pointer Cntln2<A:0> according to the second pointer generation command, the second write pointer Cntln2<A:0> being configured to give an instruction of storing the write address Address into the second cache module. The data acquisition subunit 404 is configured to receive the mask write instruction MaskWrite and generate, according to the mask write instruction MaskWrite, the pointer to be positioned Cnt<E:0>.

In some embodiments, referring to FIG. 3, the second output control unit 501 includes a fourth data receiving subunit 502 and a second output pointer generation subunit 503.

The fourth data receiving subunit 502 is configured to receive the write shift instruction WriteShift and configured to generate the second pointer output command when receiving the write shift instruction WriteShift. The second output pointer generation subunit 503 is configured to receive the second pointer output command and generate the second output pointer FifoOut2<B:0> according to the second pointer output command, the second output pointer FifoOut2<B:0> being configured to instruct the second cache module 102 to output the write address Address.

The first data receiving subunit 202, the second data receiving subunit 302, the third data receiving subunit 402, and the fourth data receiving subunit 502 are internally provided with counters having the same drive clock frequency for keeping the input data and the output data of the second cache module 102 at a consistent transmission rate, thereby achieving first-in-first-out of the data.

Referring to FIG. 4 and FIG. 1 to FIG. 3, the second cache module 102 (referring to FIG. 1) includes a first cache unit 601, a first drive unit 602, a second drive unit 603, and a first latch unit 604.

The first cache unit 601 is configured to cache the write address Address. The first drive unit 602 is connected to the first cache unit 601, is configured to receive the second output pointer FifoOut2<B:0>, and is turned on according to the second output pointer FifoOut2<B:0> to successively output the write address Address cached in the first cache unit 601. The second drive unit 603 is connected to the first cache unit 601, is configured to receive the positioned pointer Out0<F:0>, and is turned on according to the positioned pointer Out0<F:0> to selectively output the write address Address cached in the first cache unit 601. The first latch unit 604 is connected to the first drive unit 602 and the second drive unit 603, and is configured to maintain an output voltage of the first drive unit 602 or an output level of the second drive unit 603. With reference to the above description of the second cache module 102 (referring to FIG. 1), the first drive unit 602 is configured to respond to the output of the write shift instruction WriteShift, and the second drive unit 603 is configured to respond to the output of the mask write shift instruction MaskWriteShift.

In one example, the first cache unit 601 includes a plurality of first D flip-flops, and each of the first D flip-flops is configured to store the write address Address of a preset width. The width of the write address Address is limited according to the width of the address needing to be stored, and the embodiments of the present disclosure do not constitute a limitation on the storage width of the first D flip-flops.

In some embodiments, each of the first D flip-flops includes a preset width of sub-flip-flops, where each of the sub-flip-flops is configured to store 1-bit data.

In one example, the first drive unit 602 includes: a first driver provided with an input terminal connected to the first cache unit 601 and an output terminal connected to the first latch unit 604; and a receiving subunit connected to the control module 103 (referring to FIG. 1), and configured to receive the second output pointer FifoOut2<B:0> and turn on the first driver according to the second output pointer FifoOut2<B:0>. The first driver outputs the stored data in the first cache unit 601 under the driving of the second output pointer FifoOut2<B:0>.

In one example, the second drive unit 603 includes: a second driver provided with an input terminal connected to an output terminal of the first cache unit 601 and an output terminal connected to an input terminal of the first latch unit 604; and a receiving subunit connected to the control module 103 (referring to FIG. 1), and configured to receive the positioned pointer Out0<F:0> and turn on the second driver according to the positioned pointer Out0<F:0>. The second driver outputs the stored data in the first cache unit 601 under the driving of the positioned pointer Out0<F:0>.

The first latch unit 604 is configured to cache the data outputted by the first drive unit 602 and the second drive unit 603. In one example, the first latch unit 604 includes a first inverter and a second inverter. An output terminal of the first inverter is connected to an input terminal of the second inverter, and an output terminal of the second inverter is connected to an input terminal of the first inverter. That is, two stages of inverters are connected end to end to constitute a latch. In other embodiments, another latch may also be used as the first latch unit.

Referring to FIG. 5 and FIG. 1 to FIG. 3, the first cache module 101 (referring to FIG. 1) includes a second cache unit 701, a third drive unit 702, and a second latch unit 703.

The second cache unit 701 is configured to cache the pointer to be positioned Cnt<E:0>. The third drive unit 702 is connected to an output terminal of the second cache unit 701, is configured to receive the first output pointer FifoOut1<D:0>, and is turned on according to the first output pointer FifoOut1 <D:0> to output the pointer to be positioned Cnt<E:0> cached in the second cache unit 701. The second latch unit 703 is connected to the third drive unit 702, and is configured to maintain an output level of the third drive unit 702. In combination with the above description of the first cache module 101 (referring to FIG. 1), the third drive unit 702 is configured to output, in response to the mask write shift instruction MaskWriteShift, the positioned pointer Out0<F:0> to control the second cache module 102 to output the real mask write address MaskWriteAddress.

In one example, the second cache unit 701 includes a plurality of second D flip-flops, and each of the second D flip-flops is configured to store the write address Address of a preset width. The width of the write address Address is limited according to the width of the address needing to be stored, and the embodiments of the present disclosure do not constitute a limitation on the storage width of the second D flip-flops. For example, each of the second D flip-flops includes a preset width of sub-flip-flops, and each of the sub-flip-flops is configured to store 1-bit data.

In one example, the third drive unit 702 includes: a third driver provided with an input terminal connected to an output terminal of the second cache unit 701 and an output terminal connected to the second latch unit 703; and a third receiving subunit connected to the control module 103 (referring to FIG. 1), and configured to receive the first output pointer FifoOut1<D:0> and turn on the third driver according to the first output pointer FifoOut1 <D:0>.

The second latch unit 703 is configured to cache the data outputted by the third drive unit 702. In one example, the second latch unit 703 includes a third inverter and a fourth inverter. An output terminal of the third inverter is connected to an input terminal of the fourth inverter, and an output terminal of the fourth inverter is connected to an input terminal of the third inverter. That is, two stages of inverters are connected end to end to constitute a latch. In other embodiments, another latch may also be used as the second latch unit.

The write cache circuit provided by the present disclosure saves one storage space by storing the data of the write operation and the data of the mask write operation into the storage space. In addition, a location storage space configured to store the address corresponding to the mask write operation is newly added, and the number of data pieces stored in the location storage space is not greater than the number of data pieces configured to store the write address (the reason is that: the data stored in the write address includes write data and mask write data; in extreme cases, the write data are all the mask write data, and at this time, the number of data pieces stored in the location storage space is equal to the number of data pieces stored in the address storage space). That is, the capacity of the newly added storage space is smaller than the capacity of the saved storage space, thereby reducing the layout area of the write cache circuit in practical applications.

According to the write cache circuit provided in the above embodiment, another embodiment of the present disclosure provides a data write method, including the following steps:

write, according to a write command, a write address corresponding to the write command into a second cache module, the write command being one of a write instruction and a mask write instruction;

write, according to the mask write instruction, a pointer to be positioned into a first cache module, the pointer to be positioned being configured to give an instruction of writing the write address of the second cache module according to the mask write instruction; and

successively read, according to a write shift instruction, the write address stored in the second cache module, or selectively read, according to a mask write shift instruction, the write address stored in the second cache module through the pointer to be positioned in the first cache module.

In some embodiments, the step of successively reading, according to a write shift instruction, the write address stored in the second cache module includes: acquire a second output pointer according to the write shift instruction; and successively read, according to the second output pointer, the write address stored in the second cache module.

In some embodiments, the step of selectively reading, according to a mask write shift instruction, the write address stored in the second cache module through the pointer to be positioned in the first cache module includes: acquire a first output pointer according to a mask write shift instruction; successively read a positioned pointer according to the first output pointer, the positioned pointer being the pointer to be positioned that is stored in the first cache module; and selectively read, according to the positioned pointer, the write address stored in the second cache module.

It should be noted that the descriptions on the data write method are similar to those on the write cache circuit in the above embodiment. Therefore, the similar beneficial effects as the write cache circuit in the above embodiment are achieved and will not be repeated herein. Technical details not disclosed in the data write method in the embodiment of the present disclosure are understood with reference to the descriptions on the write cache circuit in the above embodiment of the present disclosure.

Another embodiment of the present disclosure further provides a memory, including the write cache circuit according to the above embodiment. The memory provided in the present disclosure includes, but is not limited to, a dynamic random access memory (DRAM), etc. The memory adopts the write cache circuit according to the above embodiment to reduce the layout area of the write circuit in practical applications.

In some embodiments, the memory is a DRAM chip, where the memory of the DRAM chip conforms to the double data rate 2 (DDR2) memory specification.

In some embodiments, the memory is a DRAM chip provided with memory meeting a DDR3 memory specification.

In some embodiments, the memory is a DRAM chip provided with memory meeting a DDR4 memory specification.

In some embodiments, the memory is a DRAM chip provided with memory meeting a DDR5 memory specification.

The embodiments or implementations of this specification are described in a progressive manner, and each embodiment focuses on differences from other embodiments. The same or similar parts between the embodiments may refer to each other.

In the description of this specification, the description with reference to terms such as "an embodiment", "an exemplary embodiment", "some implementations", "a schematic implementation", and "an example" means that the specific feature, structure, material, or characteristic described in combination with the implementation(s) or example(s) is included in at least one implementation or example of the present disclosure.

In this specification, the schematic expression of the above terms does not necessarily refer to the same implementation or example. Moreover, the described specific feature, structure, material or characteristic may be combined in an appropriate manner in any one or more implementations or examples.

It should be noted that in the description of the present disclosure, the terms such as "center", "top", "bottom", "left", "right", "vertical", "horizontal", "inner" and "outer" indicate the orientation or position relationships based on the accompanying drawings. These terms are merely intended to facilitate description of the present disclosure and simplify the description, rather than to indicate or imply that the mentioned apparatus or element must have a specific orientation and must be constructed and operated in a specific orientation. Therefore, these terms should not be construed as a limitation to the present disclosure.

It can be understood that the terms such as "first" and "second" used in the present disclosure can be used to describe various structures, but these structures are not limited by these terms. Instead, these terms are merely intended to distinguish one structure from another.

The same elements in one or more accompanying drawings are denoted by similar reference numerals. For the sake of clarity, various parts in the accompanying drawings are not drawn to scale. In addition, some well-known parts may not be shown. For the sake of brevity, a structure obtained by implementing a plurality of steps may be shown in one figure. In order to understand the present disclosure more clearly, many specific details of the present disclosure, such as the structure, material, size, processing process, and technology of the device, are described below. However, as those skilled in the art can understand, the present disclosure may not be implemented according to these specific details.

Finally, it should be noted that the above embodiments are merely intended to explain the technical solutions of the present disclosure, rather than to limit the present disclosure. Although the present disclosure is described in detail with reference to the above embodiments, those skilled in the art should understand that they may still modify the technical solutions described in the above embodiments, or make equivalent substitutions of some or all of the technical features recorded therein, without deviating the essence of the corresponding technical solutions from the scope of the technical solutions of the embodiments of the present disclosure.

### Industrial Applicability

In the write cache circuit, the data write method, and the memory provided in the embodiments of the present disclosure, the write cache circuit saves one storage space by storing the data of the write operation and the data of the mask write operation into the storage space. In addition, a location storage space configured to store the address corresponding to the mask write operation is newly added, and the number of data pieces stored in the location storage space is not greater than the number of data pieces configured to store the write address. That is, the capacity of the newly added storage space is smaller than the capacity of the saved storage space, thereby reducing the layout area of the write cache circuit in practical applications.

## Claims

1. A write cache circuit (100), comprising a control circuit (103); a first cache circuit (101) coupled to the control circuit (103); and a second cache circuit (102) coupled to the control circuit (103) and to the first cache circuit (101);
wherein the control circuit (103) is configured to:
receive a write instruction (Write), a write shift instruction (WriteShift), a mask write instruction (MaskWrite), and a mask write shift instruction (MaskWriteShift),
generate, based on the mask write instruction (MaskWrite), a first write pointer (Cntln1<C:0>) and a pointer to be positioned (Cnt<E:0>), and output the first write pointer (Cntln1<C:0>) and the pointer to be positioned (Cnt<E:0>) to the first cache circuit (101);
generate, based on the write instruction (Write) or the mask write instruction (MaskWrite) a second write pointer (Cntln2<A:0>), and output the second write pointer (Cntin2<A:0>) to the second cache circuit (102);
generate, based on the mask write shift instruction (MaskWriteShift), a first output pointer (FifoOut1<D:0>), , and output the first output pointer (FifoOut1<D:0>) to the first cache circuit (101); and
generate, based on the write shift instruction (WriteShift), a second output pointer (FifoOut2<B:0>), and output the second output pointer (FifoOut2<B:0>) to the second cache circuit (102);
wherein the first cache circuit (101) is configured to:
receive the first write pointer (Cntln1<C:0>) and the pointer to be positioned (Cnt<E:0>) from the control circuit (103),
store the pointer to be positioned (Cnt<E:0>) based on the first write pointer (Cntln1<C:0>),
receive the first output pointer (FifoOut1<D:0>) from the control circuit (103),
output, based on the first output pointer (FifoOut1<D:0>), a positioned pointer (Out0<F:0>) corresponding to the stored pointer to be positioned (Cnt<E:0>) ; and
output the positioned pointer (Out0<F:0>) to the second cache circuit (102); and
wherein the second cache circuit (102) is configured to:
receive a write address (Address),
receive the second write pointer (Cntln2<A:0>) from the control circuit (103),
store the write address (Address) based on the second write pointer (Cntln2<A:0>),
receive the second output pointer (FifoOut2<B:0>) from the control circuit (103),
receive the positioned pointer (Out0<F:0>) from the first cache circuit (101),
output, based on the second output pointer (FifoOut2<B:0>), the stored write address successively, and
output, based on the positioned pointer (Out0<F:0>), the stored write address selectively;
wherein, when the mask write instruction (MaskWrite) is received, the pointer to be positioned (Cnt<E:0>) and the second write pointer (Cntln2<A:0>) correspond to the same write address stored in the second cache circuit (102).

2. The write cache circuit (100) according to claim 1, wherein a capacity of the first cache circuit (101) is smaller than a capacity of the second cache circuit (102).

3. The write cache circuit (100) according to any one of claims 1-2, wherein the control circuit (103) comprises:
a first control submodule (113) configured to generate the first write pointer (Cntln1<C:0>) and the pointer to be positioned (Cnt<E:0>) based on the mask write instruction (MaskWrite) and to generate the first output pointer (FifoOut1<D:0>) based on the mask write shift instruction (MaskWriteShift); and
a second control submodule (123) configured to generate the second write pointer (Cntln2<A:0>) based on the write instruction (Write) or the mask write instruction (MaskWrite), to generate the second output pointer (FifoOut2<B:0>) based on the write shift instruction (WriteShift).

4. The write cache circuit (100) according to claim 3, wherein the first control submodule (113) comprises:
a first input control unit (201) configured to receive the mask write instruction (MaskWrite) and to generate the first write pointer (Cntin1<C:0>) based on the mask write instruction (MaskWrite); and
a first output control unit (301) configured to receive the mask write shift instruction (MaskWriteShift) and to generate the first output pointer (FifoOut1<D:0>) based on the mask write shift instruction (MaskWriteShift).

5. The write cache circuit (100) according to claim 4, wherein the first input control unit (201) comprises:
a first data receiving subunit (202) configured to receive the mask write instruction (MaskWrite) and configured to generate a first pointer generation command when receiving the mask write instruction (MaskWrite); and
a first write pointer generation subunit (203) configured to receive the first pointer generation command and generate the first write pointer (Cntln1<C:0>) based on the first pointer generation command, the first write pointer (Cntln1<C:0>) being an instruction for storing the pointer to be positioned (Cnt<E:0>) into the first cache circuit (101);
the first output control unit (301) comprises:
a second data receiving subunit (302) configured to receive the mask write shift (MaskWriteShift) instruction and configured to generate a first pointer output command when receiving the mask write shift instruction (MaskWriteShift); and
a first output pointer generation subunit (303) configured to receive the first pointer output command and generate the first output pointer (FifoOut1<D:0>) based on the first pointer output command, the first output pointer (FifoOut1<D:0>) being an instruction for the first cache circuit (101) to output the positioned pointer (Out0<F:0>).

6. The write cache circuit (100) according to any one of claims 3-5, wherein the second control submodule (123) comprises:
a second input control unit (401) configured to receive the write instruction (Write) or the mask write instruction (MaskWrite), to generate the second write pointer (Cntln2<A:0>) based on the write instruction (Write) or the mask write instruction (MaskWrite), and to generate, based on the mask write instruction (MaskWrite), the pointer to be positioned (Cnt<E:0>); and
a second output control unit (501) configured to receive the write shift instruction (WriteShift) and generate the second output pointer (FifoOut2<B:0>) based on the write shift instruction (WriteShift).

7. The write cache circuit (100) according to claim 6, wherein the second input control unit (401) comprises:
a third data receiving subunit (402) configured to receive the write instruction (Write) or the mask write instruction (MaskWrite) and configured to generate a second pointer generation command when receiving the write instruction (Write) or the mask write instruction (MaskWrite);
a second write pointer generation subunit (403) configured to receive the second pointer generation command and generate the second write pointer (Cntln2<A:0>) based on the second pointer generation command, the second write pointer (Cntln2<A:0>) being an instruction of storing the write address (Address) into the second cache circuit (102); and
a data acquisition subunit (404) configured to receive the mask write instruction (MaskWrite) and to generate, based on the mask write instruction, the pointer to be positioned (Cnt<E:0>);
the second output control unit (501) comprises:
a fourth data receiving subunit (502) configured to receive the write shift instruction (WriteShift) and to generate a second pointer output command when receiving the write shift instruction (WriteShift); and
a second output pointer generation subunit (503) configured to receive the second pointer output command and generate the second output pointer (FifoOut2<B:0>) based on the second pointer output command, the second output pointer (FifoOut2<B:0>) being an instruction for the second cache circuit (102) to output the write address.

8. The write cache circuit (100) according to any one of claims 1-7, wherein the second cache circuit (102) comprises:
a first cache unit (601) configured to cache the write address (Address);
a first drive unit (602) connected to the first cache unit (601), configured to receive the second output pointer (FifoOut2<B:0>) and to be turned on based on the second output pointer (FifoOut2<B:0>) to successively output the write address (Address) stored in the first cache unit (601);
a second drive unit (603) connected to the first cache unit (601), configured to receive the positioned pointer (Out0<F:0>) and to be turned on based on the positioned pointer (Out0<F:0>) to selectively output the write address (Address) stored in the first cache unit (601); and
a first latch unit (604) connected to the first drive unit (602) and the second drive unit (603) and configured to maintain an output voltage of the first drive unit (602) or an output level of the second drive unit (603).

9. The write cache circuit (100) according to claim 8, wherein the first cache unit (601) comprises a plurality of first D flip-flops, and each of the first D flip-flops is configured to store the write address of a preset width;
wherein the first drive unit (602) comprises:
a first driver provided with an input terminal connected to the first cache unit (601) and an output terminal connected to the first latch unit (604); and
a receiver connected to the control circuit (103), and configured to receive the second output pointer (FifoOut2<B:0>) and turn on the first driver based on the second output pointer (FifoOut2<B:0>);
the first latch unit (604) comprises a first inverter and a second inverter, wherein an output terminal of the first inverter is connected to an input terminal of the second inverter, and an output terminal of the second inverter is connected to an input terminal of the first inverter.

10. The write cache circuit (100) according to any one of claims 1-9, wherein the first cache circuit (101) comprises:
a second cache unit configured to cache the pointer to be positioned (Cnt<E:0>);
a third drive unit connected to the second cache unit, configured to receive the first output pointer (FifoOut1 <D:0>) and to be turned on based on the first output pointer (FifoOut1<D:0>) to output the pointer to be positioned (Cnt<E:0>) that is stored in the second cache circuit (102); and
a second latch unit connected to the third drive unit and configured to maintain an output level of the third drive unit.

11. The write cache circuit (100) according to claim 10, wherein the second cache circuit (102) comprises a plurality of second D flip-flops, and each of the second D flip-flops is configured to store the second output pointer (FifoOut2<B:0>) of a preset width.

12. A data write method, applied to the write cache circuit (100) according to any one of claims 1-11, wherein the data write method comprises:
writing, a write address (Address) corresponding to a write instruction (Write) or a mask write instruction (MaskWrite) into a second cache circuit (102);
writing, according to the mask write instruction (MaskWrite), a pointer to be positioned (Cnt<E:0>) into a first cache circuit (101), the pointer to be positioned (Cnt<E:0>) being an instruction for writing a write address of the second cache circuit (102) based on the mask write instruction (MaskWrite); and
successively reading the write address stored in the second cache circuit (102), in response to a write shift instruction (WriteShift), or selectively reading the write address stored in the second cache circuit (102) according to the pointer to be positioned (Cnt<E:0>) in the first cache circuit (101), in response to a mask write shift instruction (MaskWriteShift).

13. The data write method according to claim 12, wherein successively reading the write address stored in the second cache circuit (102), in response to a write shift instruction (WriteShift) comprises: acquiring a second output pointer (FifoOut2<B:0>) in response to the write shift instruction (WriteShift); and successively reading, according to the second output pointer (FifoOut2<B:0>), the write address stored in the second cache circuit (102).

14. The data write method according to any one of claims 12-13, wherein the selectively reading the write address stored in the second cache circuit (102) based on the pointer to be positioned (Cnt<E:0>) in the first cache circuit (101), in response to a mask write shift instruction (MaskWriteShift) comprises: acquiring a first output pointer (FifoOut1<D:0>) in response to a mask write shift instruction (MaskWriteShift); successively reading a positioned pointer (Out0<F:0>) according to the first output pointer (FifoOut1<D:0>), the positioned pointer (Out0<F:0>) being the pointer to be positioned (Cnt<E:0>) that is stored in the first cache circuit (101); and selectively reading, according to the positioned pointer(Out0<F:0>), the write address stored in the second cache circuit (102).

15. A memory, comprising the write cache circuit (100) according to any one of claims 1-11.

## Patentansprüche

1. Schreibcacheschaltung (100), umfassend eine Steuerschaltung (103); eine erste Cacheschaltung (101), die an die Steuerschaltung (103) gekoppelt ist; und eine zweite Cacheschaltung (102), die an die Steuerschaltung (103) und an die erste Cacheschaltung (101) gekoppelt ist;
wobei die Steuerschaltung (103) zu Folgendem konfiguriert ist:
Empfangen einer Schreibanweisung (Write), einer Schreibschiebeanweisung (WriteShift), einer Maskenschreibanweisung (MaskWrite) und einer Maskenschreibschiebeanweisung (MaskWriteShift),
Generieren eines ersten Schreibzeigers (CntIn1<C:0>) und eines zu positionierenden Zeigers (Cnt<E:0>) basierend auf der Maskenschreibanweisung (MaskWrite) und Ausgeben des ersten Schreibzeigers (CntIn1<C:0>) und des zu positionierenden Zeigers (Cnt<E:0>) an die erste Cacheschaltung (101);
Generieren eines zweiten Schreibzeigers (CntIn2<A:0>) basierend auf der Schreibanweisung (Write) oder der Maskenschreibanweisung (MaskWrite) und Ausgeben des zweiten Schreibzeigers (CntIn2<A:0>) an die zweite Cacheschaltung (102);
Generieren eines ersten Ausgabezeigers (FifoOut1<D:0>) basierend auf der Maskenschreibschiebeanweisung (MaskWriteShift) und Ausgeben des ersten Ausgabezeigers (FifoOut1<D:0>) an die erste Cacheschaltung (101); und
Generieren eines zweiten Ausgabezeigers (FifoOut2<B:0>) basierend auf der Schreibschiebeanweisung (WriteShift) und Ausgeben des zweiten Ausgabezeigers (FifoOut2<B:0>) an die zweite Cacheschaltung (102);
wobei die erste Cacheschaltung (101) zu Folgendem konfiguriert ist:
Empfangen des ersten Schreibzeigers (CntIn1<C:0>) und des zu positionierenden Zeigers (Cnt<E:0>) von der Steuerschaltung (103),
Speichern des zu positionierenden Zeigers (Cnt<E:0>) basierend auf dem ersten Schreibzeiger (CntIn1<C:0>),
Empfangen des ersten Ausgabezeigers (FifoOut1<D:0>) von der Steuerschaltung (103),
Ausgeben eines positionierten Zeigers (Out0<F:0>), der dem gespeicherten zu positionierenden Zeiger (Cnt<E:0>) entspricht, basierend auf dem ersten Ausgabezeiger (FifoOut1<D:0>); und
Ausgeben des positionierten Zeigers (Out0<F:0>) an die zweite Cacheschaltung (102); und
wobei die zweite Cacheschaltung (102) zu Folgendem konfiguriert ist:
Empfangen einer Schreibadresse (Address),
Empfangen des zweiten Schreibzeigers (CntIn2<A:0>) von der Steuerschaltung (103),
Speichern der Schreibadresse (Address) basierend auf dem zweiten Schreibzeiger (CntIn2<A:0>),
Empfangen des zweiten Ausgabezeigers (FifoOut2<B:0>) von der Steuerschaltung (103),
Empfangen des positionierten Zeigers (Out0<F:0>) von der ersten Cacheschaltung (101),
Ausgeben der gespeicherten Schreibadresse sukzessive basierend auf dem zweiten Ausgabezeiger (FifoOut2<B:0>) und
Ausgeben der gespeicherten Schreibadresse selektiv basierend auf dem positionierten Zeiger (Out0<F:0>);
wobei, wenn die Maskenschreibanweisung (MaskWrite) empfangen wird, der zu positionierende Zeiger (Cnt<E:0>) und der zweite Schreibzeiger (CntIn2<A:0>) der gleichen in der zweiten Cacheschaltung (102) gespeicherten Schreibadresse entsprechen.

2. Schreibcacheschaltung (100) nach Anspruch 1, wobei eine Kapazität der ersten Cacheschaltung (101) kleiner als eine Kapazität der zweiten Cacheschaltung (102) ist.

3. Schreibcacheschaltung (100) nach einem der Ansprüche 1-2, wobei die Steuerschaltung (103) Folgendes umfasst:
ein erstes Steueruntermodul (113), das dazu konfiguriert ist, den ersten Schreibzeiger (CntIn1<C:0>) und den zu positionierenden Zeiger (Cnt<E:0>) basierend auf der Maskenschreibanweisung (MaskWrite) zu generieren und den ersten Ausgabezeiger (FifoOut1<D:0>) basierend auf der Maskenschreibschiebeanweisung (MaskWriteShift) zu generieren; und
ein zweites Steueruntermodul (123), das dazu konfiguriert ist, den zweiten Schreibzeiger (CntIn2<A:0>) basierend auf der Schreibanweisung (Write) oder der Maskenschreibanweisung (MaskWrite) zu generieren, um den zweiten Ausgabezeiger (FifoOut2<B:0>) basierend auf der Schreibschiebeanweisung (WriteShift) zu generieren.

4. Schreibcacheschaltung (100) nach Anspruch 3, wobei das erste Steueruntermodul (113) Folgendes umfasst:
eine erste Eingabesteuereinheit (201), die dazu konfiguriert ist, die Maskenschreibanweisung (MaskWrite) zu empfangen und den ersten Schreibzeiger (CntIn1<C:0>) basierend auf der Maskenschreibanweisung (MaskWrite) zu generieren; und
eine erste Ausgabesteuereinheit (301), die dazu konfiguriert ist, die Maskenschreibschiebeanweisung (MaskWriteShift) zu empfangen und den ersten Ausgabezeiger (FifoOut1<D:0>) basierend auf der Maskenschreibschiebeanweisung (MaskWriteShift) zu generieren.

5. Schreibcacheschaltung (100) nach Anspruch 4, wobei die erste Eingabesteuereinheit (201) Folgendes umfasst:
eine erste Datenempfangsuntereinheit (202), die dazu konfiguriert ist, die Maskenschreibanweisung (MaskWrite) zu empfangen, und dazu konfiguriert ist, einen ersten Zeigergenerierungsbefehl zu generieren, wenn die Maskenschreibanweisung (MaskWrite) empfangen wird; und
eine erste Schreibzeigergenerierungsuntereinheit (203), die dazu konfiguriert ist, den ersten Zeigergenerierungsbefehl zu empfangen und den ersten Schreibzeiger (CntIn1<C:0>) basierend auf dem ersten Zeigergenerierungsbefehl zu generieren, wobei der erste Schreibzeiger (CntIn1<C:0>) eine Anweisung zum Speichern des zu positionierenden Zeigers (Cnt<E:0>) in der ersten Cacheschaltung (101) ist;
die erste Ausgabesteuereinheit (301) Folgendes umfasst:
eine zweite Datenempfangsuntereinheit (302), die dazu konfiguriert ist, die Maskenschreibschiebeanweisung (MaskWriteShift) zu empfangen, und dazu konfiguriert ist, einen ersten Zeigerausgabebefehl zu generieren, wenn die Maskenschreibschiebeanweisung (MaskWriteShift) empfangen wird; und
eine erste Ausgabezeigergenerierungsuntereinheit (303), die dazu konfiguriert ist, den ersten Zeigerausgabebefehl zu empfangen und den ersten Ausgabezeiger (FifoOut1<D:0>) basierend auf dem ersten Zeigerausgabebefehl zu generieren, wobei der erste Ausgabezeiger (FifoOut1<D:0>) eine Anweisung ist, damit die erste Cacheschaltung (101) den positionierten Zeiger (Out0<F:0>) ausgibt.

6. Schreibcacheschaltung (100) nach einem der Ansprüche 3-5, wobei das zweite Steueruntermodul (123) Folgendes umfasst:
eine zweite Eingabesteuereinheit (401), die dazu konfiguriert ist, die Schreibanweisung (Write) oder die Maskenschreibanweisung (MaskWrite) zu empfangen, um den zweiten Schreibzeiger (CntIn2<A:0>) basierend auf der Schreibanweisung (Write) oder der Maskenschreibanweisung (MaskWrite) zu generieren und den zu positionierenden Zeiger (Cnt<E:0>) basierend auf der Maskenschreibanweisung (MaskWrite) zu generieren; und
eine zweite Ausgabesteuereinheit (501), die dazu konfiguriert ist, die Schreibschiebeanweisung (WriteShift) zu empfangen und den zweiten Ausgabezeiger (FifoOut2<B:0>) basierend auf der Schreibschiebeanweisung (WriteShift) zu generieren.

7. Schreibcacheschaltung (100) nach Anspruch 6, wobei die zweite Eingabesteuereinheit (401) Folgendes umfasst:
eine dritte Datenempfangsuntereinheit (402), die dazu konfiguriert ist, die Schreibanweisung (Write) oder die Maskenschreibanweisung (MaskWrite) zu empfangen, und dazu konfiguriert ist, einen zweiten Zeigergenerierungsbefehl zu generieren, wenn die Schreibanweisung (Write) oder die Maskenschreibanweisung (MaskWrite) empfangen wird;
eine zweite Schreibzeigergenerierungsuntereinheit (403), die dazu konfiguriert ist, den zweiten Zeigergenerierungsbefehl zu empfangen und den zweiten Schreibzeiger (CntIn2<A:0>) basierend auf dem zweiten Zeigergenerierungsbefehl zu generieren, wobei der zweite Schreibzeiger (CntIn2<A:0>) eine Anweisung zum Speichern der Schreibadresse (Address) in der zweiten Cacheschaltung (102) ist; und
eine Datenerfassungsuntereinheit (404), die dazu konfiguriert ist, die Maskenschreibanweisung (MaskWrite) zu empfangen und basierend auf der Maskenschreibanweisung den zu positionierenden Zeiger (Cnt<E:0>) zu generieren;
die zweite Ausgabesteuereinheit (501) Folgendes umfasst:
eine vierte Datenempfangsuntereinheit (502), die dazu konfiguriert ist, die Schreibschiebeanweisung (WriteShift) zu empfangen und einen zweiten Zeigerausgabebefehl zu generieren, wenn die Schreibschiebeanweisung (WriteShift) empfangen wird; und
eine zweite Ausgabezeigergenerierungsuntereinheit (503), die dazu konfiguriert ist, den zweiten Zeigerausgabebefehl zu empfangen und den zweiten Ausgabezeiger (FifoOut2<B:0>) basierend auf dem zweiten Zeigerausgabebefehl zu generieren, wobei der zweite Ausgabezeiger (FifoOut2<B:0>) eine Anweisung ist, damit die zweite Cacheschaltung (102) die Schreibadresse ausgibt.

8. Schreibcacheschaltung (100) nach einem der Ansprüche 1-7, wobei die zweite Cacheschaltung (102) Folgendes umfasst:
eine erste Cacheeinheit (601), die dazu konfiguriert ist, die Schreibadresse (Address) zu cachen;
eine mit der ersten Cacheeinheit (601) verbundene erste Antriebseinheit (602), die dazu konfiguriert ist, den zweiten Ausgabezeiger (FifoOut2<B:0>) zu empfangen und basierend auf dem zweiten Ausgabezeiger (FifoOut2<B:0>) eingeschaltet zu werden, um die in der ersten Cacheeinheit (601) gespeicherte Schreibadresse (Address) sukzessive auszugeben;
eine mit der ersten Cacheeinheit (601) verbundene zweite Antriebseinheit (603), die dazu konfiguriert ist, den positionierten Zeiger (Out0<F:0>) zu empfangen und basierend auf dem positionierten Zeiger (Out0<F:0>) eingeschaltet zu werden, um die in der ersten Cacheeinheit (601) gespeicherte Schreibadresse (Address) selektiv auszugeben; und
eine erste Latcheinheit (604), die mit der ersten Antriebseinheit (602) und der zweiten Antriebseinheit (603) verbunden ist und dazu konfiguriert ist, eine Ausgangsspannung der ersten Antriebseinheit (602) oder einen Ausgangspegel der zweiten Antriebseinheit (603) aufrechtzuerhalten.

9. Schreibcacheschaltung (100) nach Anspruch 8, wobei die erste Cacheeinheit (601) eine Vielzahl von ersten D-Flip-Flops umfasst und jeder der ersten D-Flip-Flops dazu konfiguriert ist, die Schreibadresse einer voreingestellten Breite zu speichern;
wobei die erste Antriebseinheit (602) Folgendes umfasst:
einen ersten Treiber, der mit einem Eingangsanschluss, der mit der ersten Cacheeinheit (601) verbunden ist, und einem Ausgangsanschluss, der mit der ersten Latcheinheit (604) verbunden ist, versehen ist; und
einen Empfänger, der mit der Steuerschaltung (103) verbunden ist und dazu konfiguriert ist, den zweiten Ausgabezeiger (FifoOut2<B:0>) zu empfangen und den ersten Treiber basierend auf dem zweiten Ausgabezeiger (FifoOut2<B:0>) einzuschalten;
die erste Latcheinheit (604) einen ersten Wechselrichter und einen zweiten Wechselrichter umfasst, wobei ein Ausgangsanschluss des ersten Wechselrichters mit einem Eingangsanschluss des zweiten Wechselrichters verbunden ist und ein Ausgangsanschluss des zweiten Wechselrichters mit einem Eingangsanschluss des ersten Wechselrichters verbunden ist.

10. Schreibcacheschaltung (100) nach einem der Ansprüche 1-9, wobei die erste Cacheschaltung (101) Folgendes umfasst:
eine zweite Cacheeinheit, die dazu konfiguriert ist, den zu positionierenden Zeiger (Cnt<E:0>) zu cachen;
eine mit der zweiten Cacheeinheit verbundene dritte Antriebseinheit, die dazu konfiguriert ist, den ersten Ausgabezeiger (FifoOut1<D:0>) zu empfangen und basierend auf dem ersten Ausgabezeiger (FifoOut1<D:0>) eingeschaltet zu werden, um den zu positionierenden Zeiger (Cnt<E:0>) auszugeben, der in der zweiten Cacheschaltung (102) gespeichert ist; und
eine zweite Latcheinheit, die mit der dritten Antriebseinheit verbunden ist und dazu konfiguriert ist, einen Ausgangspegel der dritten Antriebseinheit aufrechtzuerhalten.

11. Schreibcacheschaltung (100) nach Anspruch 10, wobei die zweite Cacheschaltung (102) eine Vielzahl von zweiten D-Flip-Flops umfasst und jeder der zweiten D-Flip-Flops dazu konfiguriert ist, den zweiten Ausgabezeiger (FifoOut2<B:0>) einer voreingestellten Breite zu speichern.

12. Datenschreibverfahren, das auf die Schreibcacheschaltung (100) nach einem der Ansprüche 1-11 angewendet wird, wobei das Datenschreibverfahren Folgendes umfasst:
Schreiben einer Schreibadresse (Address), die einer Schreibanweisung (Write) oder einer Maskenschreibanweisung (MaskWrite) entspricht, in eine zweite Cacheschaltung (102);
Schreiben eines zu positionierenden Zeigers (Cnt<E:0>) gemäß der Maskenschreibanweisung (MaskWrite) in eine erste Cacheschaltung (101), wobei der zu positionierende Zeiger (Cnt<E:0>) eine Anweisung zum Schreiben einer Schreibadresse der zweiten Cacheschaltung (102) basierend auf der Maskenschreibanweisung (MaskWrite) ist; und
sukzessives Lesen der in der zweiten Cacheschaltung (102) gespeicherten Schreibadresse als Reaktion auf eine Schreibschiebeanweisung (WriteShift) oder selektives Lesen der in der zweiten Cacheschaltung (102) gespeicherten Schreibadresse gemäß dem zu positionierenden Zeiger (Cnt<E:0>) in der ersten Cacheschaltung (101) als Reaktion auf eine Maskenschreibschiebeanweisung (MaskWriteShift).

13. Datenschreibverfahren nach Anspruch 12, wobei das sukzessive Lesen der in der zweiten Cacheschaltung (102) gespeicherten Schreibadresse als Reaktion auf eine Schreibschiebeanweisung (WriteShift) Folgendes umfasst: Erfassen eines zweiten Ausgabezeigers (FifoOut2<B:0>) als Reaktion auf die Schreibschiebeanweisung (WriteShift); und sukzessives Lesen der in der zweiten Cacheschaltung (102) gespeicherten Schreibadresse gemäß dem zweiten Ausgabezeiger (FifoOut2<B:0>).

14. Datenschreibverfahren nach einem der Ansprüche 12-13, wobei das selektive Lesen der in der zweiten Cacheschaltung (102) gespeicherten Schreibadresse basierend auf dem zu positionierenden Zeiger (Cnt<E:0>) in der ersten Cacheschaltung (101) als Reaktion auf eine Maskenschreibschiebeanweisung (MaskWriteShift) Folgendes umfasst: Erfassen eines ersten Ausgabezeigers (FifoOut1<D:0>) als Reaktion auf eine Maskenschreibschiebeanweisung (MaskWriteShift); sukzessives Lesen eines positionierten Zeigers (Out0<F:0>) gemäß dem ersten Ausgabezeiger (FifoOut1<D:0>), wobei der positionierte Zeiger (Out0<F:0>) der zu positionierende Zeiger (Cnt<E:0>) ist, der in der ersten Cacheschaltung (101) gespeichert ist; und selektives Lesen der in der zweiten Cacheschaltung (102) gespeicherten Schreibadresse gemäß dem positionierten Zeiger (Out0<F:0>).

15. Speicher, umfassend die Schreibcacheschaltung (100) nach einem der Ansprüche 1-11.

## Revendications

1. Circuit de mémoire cache d'écriture (100), comprenant un circuit de commande (103) ;
un premier circuit de mémoire cache (101) couplé au circuit de commande (103) ; et un deuxième circuit de mémoire cache (102) couplé au circuit de commande (103) et au premier circuit de mémoire cache (101) ;
dans lequel le circuit de commande (103) est configuré de manière à :
recevoir une instruction d'écriture (Write), une instruction de décalage et écriture (WriteShift), une instruction d'écriture masquée (MaskWrite), et une instruction de décalage et écriture masquée (MaskWriteShift),
générer, à partir de l'instruction d'écriture masquée (MaskWrite), un premier pointeur d'écriture (CntIn1<C:0>) et un pointeur à positionner (Cnt<E:0>), et sortir le premier pointeur d'écriture (CntIn1<C:0>) et le pointeur à positionner (Cnt<E:0>) vers le premier circuit de mémoire cache (101) ;
générer, à partir de l'instruction d'écriture (Write) ou de l'instruction d'écriture masquée (MaskWrite), un deuxième pointeur d'écriture (CntIn2<A:0>), et sortir le deuxième pointeur d'écriture (CntIn2<A:0>) vers le deuxième circuit de mémoire cache (102) ;
générer, à partir de l'instruction de décalage et écriture masquée (MaskWriteShift), un premier pointeur de sortie (FifoOut1<D:0>), et sortir le premier pointeur de sortie (FifoOut1<D:0>) vers le premier circuit de mémoire cache (101) ; et
générer, à partir de l'instruction de décalage et écriture (WriteShift), un deuxième pointeur de sortie (FifoOut2<B:0>), et sortir le deuxième pointeur de sortie (FifoOut2<B:0>) vers le deuxième circuit de mémoire cache (102) ;
dans lequel le premier circuit de mémoire cache (101) est configuré de manière à :
recevoir le premier pointeur d'écriture (CntIn1<C:0>) et le pointeur à positionner (Cnt<E:0>) depuis le circuit de commande (103),
stocker le pointeur à positionner (Cnt<E:0>) à partir du premier pointeur d'écriture (CntIn1<C:0>),
recevoir le premier pointeur de sortie (FifoOut1<D:0>) depuis le circuit de commande (103),
sortir, à partir du premier pointeur de sortie (FifoOut1<D:0>), un pointeur positionné (Out0<F:0>) correspondant au pointeur stocké à positionner (Cnt<E : 0>) ; et
sortir le pointeur positionné (Out0<F:0>) vers le deuxième circuit de mémoire cache (102) ; et
dans lequel le deuxième circuit de mémoire cache (102) est configuré de manière à :
recevoir une adresse d'écriture (Address),
recevoir le deuxième pointeur d'écriture (CntIn2<A:0>) depuis le circuit de commande (103),
stocker l'adresse d'écriture (Address) à partir du deuxième pointeur d'écriture (CntIn2<A : 0>),
recevoir le deuxième pointeur de sortie (FifoOut2<B:0>) depuis le circuit de commande (103),
recevoir le pointeur positionné (Out0<F:0>) depuis le premier circuit de mémoire cache (101),
sortir, à partir du deuxième pointeur de sortie (FifoOut2<B:0>), l'adresse d'écriture stockée successivement, et
sortir, à partir du pointeur positionné (Out0<F:0>), l'adresse d'écriture stockée sélectivement ;
dans lequel, lorsque l'instruction d'écriture masquée (MaskWrite) est reçue, le pointeur à positionner (Cnt<E:0>) et le deuxième pointeur d'écriture (CntIn2<A:0>) correspondent à la même adresse d'écriture stockée dans le deuxième circuit de mémoire cache (102).

2. Circuit de mémoire cache d'écriture (100) selon la revendication 1, dans lequel une capacité du premier circuit de mémoire cache (101) est inférieure à une capacité du deuxième circuit de mémoire cache (102).

3. Circuit de mémoire cache d'écriture (100) selon l'une des revendications 1 à 2, dans lequel le circuit de commande (103) comprend :
un premier sous-module de commande (113) configuré de manière à générer le premier pointeur d'écriture (CntIn1<C:0>) et le pointeur à positionner (Cnt<E:0>) à partir de l'instruction d'écriture masquée (MaskWrite) et générer le premier pointeur de sortie (FifoOut1<D:0>) à partir de l'instruction de décalage et écriture masquée (MaskWriteShift) ; et
un deuxième sous-module de commande (123) configuré de manière à générer le deuxième pointeur d'écriture (CntIn2<A:0>) à partir de l'instruction d'écriture (Write) ou l'instruction d'écriture masquée (MaskWrite) pour générer le deuxième pointeur de sortie (FifoOut2<B:0>) à partir de l'instruction de décalage et écriture (WriteShift).

4. Circuit de mémoire cache d'écriture (100) selon la revendication 3, dans lequel le premier sous-module de commande (113) comprend :
une première unité de commande d'entrée (201) configurée de manière à recevoir l'instruction d'écriture masquée (MaskWrite) et générer le premier pointeur d'écriture (CntIn1<C:0>) à partir de l'instruction d'écriture masquée (MaskWrite) ; et
une première unité de commande de sortie (301) configurée de manière à recevoir l'instruction de décalage et écriture masquée (MaskWriteShift) et générer le premier pointeur de sortie (FifoOut1<D:0>) à partir de l'instruction de décalage et écriture masquée (MaskWriteShift).

5. Circuit de mémoire cache d'écriture (100) selon la revendication 4, dans lequel la première unité de commande d'entrée (201) comprend :
une première sous-unité de réception de données (202) configurée de manière à recevoir l'instruction d'écriture masquée (MaskWrite) et configurée de manière à générer une première commande de génération de pointeur lors de la réception de l'instruction d'écriture masquée (MaskWrite) ; et
une première sous-unité de génération de pointeur d'écriture (203) configurée de manière à recevoir la première commande de génération de pointeur et générer le premier pointeur d'écriture (CntIn1<C:0>) à partir de la première commande de génération de pointeur, le premier pointeur d'écriture (CntIn1<C:0>) étant une instruction de stockage du pointeur à positionner (Cnt<E:0>) dans le premier circuit de mémoire cache (101) ;
la première unité de commande de sortie (301) comprend :
une deuxième sous-unité de réception de données (302) configurée de manière à recevoir l'instruction de décalage et écriture masquée (MaskWriteShift) et configurée de manière à générer une première commande de sortie de pointeur lors de la réception de l'instruction de décalage et écriture masquée (MaskWriteShift) ; et
une première sous-unité de génération de pointeur de sortie (303) configurée de manière à recevoir la première commande de sortie de pointeur et générer le premier pointeur de sortie (FifoOut1<D:0>) à partir de la première commande de sortie de pointeur, le premier pointeur de sortie (FifoOut1<D:0>) étant une instruction pour le premier circuit de mémoire cache (101) afin de sortir le pointeur positionné (Out0<F:0>).

6. Circuit de mémoire cache d'écriture (100) selon l'une des revendications 3 à 5, dans lequel le deuxième sous-module de commande (123) comprend :
une deuxième unité de commande d'entrée (401) configurée de manière à recevoir l'instruction d'écriture (Write) ou l'instruction d'écriture masquée (MaskWrite) pour générer le deuxième pointeur d'écriture (CntIn2<A:0>) à partir de l'instruction d'écriture (Write) ou l'instruction d'écriture masquée (MaskWrite), et générer, à partir de l'instruction d'écriture masquée (MaskWrite), le pointeur à positionner (Cnt<E:0>) ; et
une deuxième unité de commande de sortie (501) configurée de manière à recevoir l'instruction de décalage et écriture (WriteShift) et générer le deuxième pointeur de sortie (FifoOut2<B:0>) à partir de l'instruction de décalage et écriture (WriteShift).

7. Circuit de mémoire cache d'écriture (100) selon la revendication 6, dans lequel la deuxième unité de commande d'entrée (401) comprend :
une troisième sous-unité de réception de données (402) configurée de manière à recevoir l'instruction d'écriture (Write) ou l'instruction d'écriture masquée (MaskWrite) et configurée de manière à générer une deuxième commande de génération de pointeur lors de la réception de l'instruction d'écriture (Write) ou de l'instruction d'écriture masquée (MaskWrite) ;
une deuxième sous-unité de génération de pointeur d'écriture (403) configurée de manière à recevoir la deuxième commande de génération de pointeur et générer le deuxième pointeur d'écriture (CntIn2<A:0>) à partir de la deuxième commande de génération de pointeur, le deuxième pointeur d'écriture (CntIn2<A:0>) étant une instruction de stockage de l'adresse d'écriture (Address) dans le deuxième circuit de mémoire cache (102) ; et
une sous-unité d'acquisition de données (404) configurée de manière à recevoir l'instruction d'écriture masquée (MaskWrite) et générer, à partir de l'instruction d'écriture masquée, le pointeur à positionner (Cnt<E:0>) ;
la deuxième unité de commande de sortie (501) comprend :
une quatrième sous-unité de réception de données (502) configurée de manière à recevoir l'instruction de décalage et écriture (WriteShift) et générer une deuxième commande de sortie de pointeur lors de la réception de l'instruction de décalage et écriture (WriteShift) ; et
une deuxième sous-unité de génération de pointeur de sortie (503) configurée de manière à recevoir la deuxième commande de sortie de pointeur et générer le deuxième pointeur de sortie (FifoOut2<B:0>) à partir de la deuxième commande de sortie de pointeur, le deuxième pointeur de sortie (FifoOut2<B:0>) étant une instruction pour le deuxième circuit de mémoire cache (102) afin de sortir l'adresse d'écriture.

8. Circuit de mémoire cache d'écriture (100) selon l'une des revendications 1 à 7, dans lequel le deuxième circuit de mémoire cache (102) comprend :
une première unité de mémoire cache (601) configurée de manière à mettre en cache l'adresse d'écriture (Address) ;
une première unité de pilotage (602) reliée à la première unité de mémoire cache (601), configurée de manière à recevoir le deuxième pointeur de sortie (FifoOut2<B:0>) et être activée à partir du deuxième pointeur de sortie (FifoOut2<B : 0>) pour sortir successivement l'adresse d'écriture (Address) stockée dans la première unité de mémoire cache (601) ;
une deuxième unité de pilotage (603) reliée à la première unité de mémoire cache (601), configurée de manière à recevoir le pointeur positionné (Out0<F:0>) et être activée à partir du pointeur positionné (Out0<F:0>) pour sortir sélectivement l'adresse d'écriture (Address) stockée dans la première unité de mémoire cache (601) ; et
une première unité de verrouillage (604) reliée à la première unité de pilotage (602) et la deuxième unité de pilotage (603) et configurée de manière à maintenir une tension de sortie de la première unité de pilotage (602) ou un niveau de sortie de la deuxième unité de pilotage (603).

9. Circuit de mémoire cache d'écriture (100) selon la revendication 8, dans lequel la première unité de mémoire cache (601) comprend une pluralité de premières bascules D, et chacune des premières bascules D est configurée de manière à stocker l'adresse d'écriture d'une largeur prédéterminée ;
dans lequel la première unité de pilotage (602) comprend :
un premier pilote muni d'une borne d'entrée reliée à la première unité de mémoire cache (601) et d'une borne de sortie reliée à la première unité de verrouillage (604) ; et
un récepteur relié au circuit de commande (103), et configuré de manière à recevoir le deuxième pointeur de sortie (FifoOut2<B:0>) et activer le premier pilote à partir du deuxième pointeur de sortie (FifoOut2<B:0>) ;
la première unité de verrouillage (604) comprend un premier inverseur et un deuxième inverseur, dans laquelle une borne de sortie du premier inverseur est reliée à une borne d'entrée du deuxième inverseur, et une borne de sortie du deuxième inverseur est reliée à une borne d'entrée du premier inverseur.

10. Circuit de mémoire cache d'écriture (100) selon l'une des revendications 1 à 9, dans lequel le premier circuit de mémoire cache (101) comprend :
une deuxième unité de mémoire cache configurée de manière à mettre en cache le pointeur à positionner (Cnt<E:0>) ;
une troisième unité de pilotage reliée à la deuxième unité de mémoire cache, configurée de manière à recevoir le premier pointeur de sortie (FifoOut1<D:0>) et être activée à partir du premier pointeur de sortie (FifoOut1<D:0>) pour sortir le pointeur à positionner (Cnt<E:0>) qui est stocké dans le deuxième circuit de mémoire cache (102) ; et
une deuxième unité de verrouillage reliée à la troisième unité de pilotage et configurée de manière à maintenir un niveau de sortie de la troisième unité de pilotage.

11. Circuit de mémoire cache d'écriture (100) selon la revendication 10, dans lequel le deuxième circuit de mémoire cache (102) comprend une pluralité de deuxièmes bascules D, et chacune des deuxièmes bascules D est configurée de manière à stocker le deuxième pointeur de sortie (FifoOut2<B:0>) d'une largeur prédéterminée.

12. Procédé d'écriture de données, appliqué au circuit de mémoire cache d'écriture (100) selon l'une des revendications 1 à 11, dans lequel le procédé d'écriture de données comprend :
l'écriture d'une adresse d'écriture (Address) correspondant à une instruction d'écriture (Write) ou une instruction d'écriture masquée (MaskWrite) dans un deuxième circuit de mémoire cache (102) ;
l'écriture, selon l'instruction d'écriture masquée (MaskWrite), d'un pointeur à positionner (Cnt<E:0>) dans un premier circuit de mémoire cache (101), le pointeur à positionner (Cnt<E:0>) étant une instruction d'écriture d'une adresse d'écriture du deuxième circuit de mémoire cache (102) à partir de l'instruction d'écriture masquée (MaskWrite) ; et
la lecture successive de l'adresse d'écriture stockée dans le deuxième circuit de mémoire cache (102), en réponse à une instruction de décalage et écriture (WriteShift), ou la lecture sélective de l'adresse d'écriture stockée dans le deuxième circuit de mémoire cache (102) selon le pointeur à positionner (Cnt<E:0>) dans le premier circuit de mémoire cache (101), en réponse à une instruction de décalage et écriture masque (MaskWriteShift).

13. Procédé d'écriture de données selon la revendication 12, dans lequel la lecture successive de l'adresse d'écriture stockée dans le deuxième circuit de mémoire cache (102), en réponse à une instruction de décalage et écriture (WriteShift) comprend : l'acquisition d'un deuxième pointeur de sortie (FifoOut2<B:0>) en réponse à l'instruction de décalage et écriture (WriteShift) ; et la lecture successive, selon le deuxième pointeur de sortie (FifoOut2<B:0>), de l'adresse d'écriture stockée dans le deuxième circuit de mémoire cache (102).

14. Procédé d'écriture de données selon l'une des revendications 12 à 13, dans lequel la lecture sélective de l'adresse d'écriture stockée dans le deuxième circuit de mémoire cache (102) à partir du pointeur à positionner (Cnt<E:0>) dans le premier circuit de mémoire cache (101), en réponse à une instruction de décalage et écriture masquée (MaskWriteShift) comprend : l'acquisition d'un premier pointeur de sortie (FifoOut1<D:0>) en réponse à une instruction de décalage et écriture masquée (MaskWriteShift) ; la lecture successive d'un pointeur positionné (Out0<F:0>) selon le premier pointeur de sortie (FifoOut1<D:0>), le pointeur positionné (Out0<F:0>) étant le pointeur à positionner (Cnt<E:0>) qui est stocké dans le premier circuit de mémoire cache (101) ; et la lecture sélective, selon le pointeur positionné (Out0<F:0>), de l'adresse d'écriture stockée dans le deuxième circuit de mémoire cache (102).

15. Mémoire, comprenant le circuit de mémoire cache d'écriture (100) selon l'une des revendications 1 à 11.
